# EUROPEAN PATENT SPECIFICATION

(11) **EP 3 857 178 B1**
(45) Date of publication and mention of the grant of the patent: **26.01.2022**
(21) Application number: 18796106.5
(22) Date of filing: 27.09.2018
(51) Int. Cl.: G01F 5/00, F23N 5/18, F23N 1/00

(54) **A MODULE FOR MEASURING THE FLOW RATE OF FUEL AND A BURNER COMPRISING SUCH MODULE**
MODUL ZUR DURCHFLUSSMESSUNG VON BRENNSTOFF UND BRENNER MIT EINEM SOLCHEN MODUL
MODULE DE MESURE DU DÉBIT DE CARBURANT ET BRÛLEUR COMPRENANT UN TEL MODULE

(43) Date of publication of application: 04.08.2021
(73) Proprietor: C.I.B. Unigas S.p.A., 35011 Campodarsego (Padova) (IT)
(72) Inventor: PANCOLINI, Riccardo, 35011 Campodarsego (Padova) (IT)
(74) Representative: Anselmi, Davide
(86) International application number: PCT/IB2018/057492
(87) International publication number: WO 2020/065379

(56) References cited:
- EP-A2- 1 464 928
- EP-B1- 0 483 515
- WO-A1-2015/121800
- DE-A1-102004 005 760
- DE-B4-102004 005 760
- US-A- 3 559 482

## Description

### Technical Field

The present invention relates to a module for measuring the flow rate of fuel and a burner comprising such measuring module.

Fuel means a fluid of the liquid, gasified or gaseous type. Preferably, the fuel comprises methane or LPG or biogas or natural gas or a combination of such substances or other substances able to burn in combustion and not expressly mentioned herein.

It is to be specified that the measuring module according to the present invention may also be adapted for use in sectors other than the area of the burner, for measuring any gaseous flow (not only fuel).

The present invention preferably applies to burners used both in the civil field (e.g. for domestic heating) and in the industrial field (e.g. for producing heat in general, for furnaces, for heating air, etc.).

In particular, the present invention is used in non-premixed burners, i.e. burners in which the mixing between comburent and fuel takes place directly at a head of the burner.

### Prior Art

According to the prior art, a blown-air burner comprises an inlet conduit for a fuel (usually a combustible gas) and an inlet conduit for a comburent (usually air). Such inlet conduits flow together into a combustion zone where the burner head is present. In this way, the mixing of the comburent with the fuel creates combustion (when activated by a triggering spark).

A burner usually comprises a combustible gas regulation valve arranged along the fuel inlet conduit for regulating the amount of gas that is supplied to the head.

Furthermore, for managing the gas regulation valve and the air inlet opening section there are two known techniques.

A first known technique envisages that the movement of the gas regulation valve and of the air inlet opening section is of the mechanical type. In other words, the regulation of the valve and of the inlet section is performed through the movement of respective movable cams constructed based on an air/gas ratio curve predefined during the testing step. The movement of the cam is controlled, for example, by a control unit as a function of measured temperature and pressure values (e.g. on boiler vapours).

This first known technique represents only one of the currently widespread types of control preferably used for mechanical "modulating" burners.

A second known technique envisages that the management of the gas regulation valve and of the air inlet opening section is of the electronic type. In that case, the regulation of the valve and of the inlet section is realised electronically based on an air/gas ratio curve predefined during the testing step and stored in a memory unit. Additionally, such regulation can be performed as a function of the combustion gases detected by a relevant sensor for detecting the O2 and/or CO contained in the fumes. In that case, a control unit is configured to maintain the combustion at an optimal level according to the curve related to the excess air index.

In any case, to evaluate the fuel flow rate and assign a loading percentage to the burner or for other measurements to be performed, it is necessary to measure the fuel flow rate. With reference to fuel measurement, numerous types of sensors are currently available that are interposed along the gas detection conduit.

An example of gas detection sensors is described in document VR2014A000036 filed in the name of the same applicant in which the sensor is integrated into a conveyor that is arranged centrally with respect to the fuel conduit. Other techniques are known from documents EP 1 464 928, DE 10 2004 005760, WO 2015/121800, EP0483515. Disadvantageously, known techniques suffer from various problems connected with measurement errors of the aforesaid sensors.

In particular, known flow rate measurement sensors can suffer from phenomena connected with confined flow imbalance in conduits with a disadvantageous passage section/fluid speed ratio or in the presence of sudden section changes, where a linear distance corresponding to a minimum number of diameters upstream of the sensitive element has not been complied with, or may even be influenced by turbulence phenomena connected with high Reynolds numbers or be subject to incorrect positioning. In other words, flow rate measurement sensors can measure an incorrect flow rate value because of such variations, leading, in control systems that base their regulation on the reading of flow rates, to defective combustion or that does not reach the required degree of power.

In detail, the operation of the burner is based on the air/gas ratio and, disadvantageously, a variation in the measurement of the gas values could bring the burner into non-optimal operating conditions as the air/gas curve is no longer appropriate for the combustion to be obtained.

### Object of the invention

The technical task of the present invention is therefore that of providing a module for measuring the flow rate of fuel and a burner comprising such measuring module that are able to overcome the drawbacks that have emerged from the prior art.

The object of the present invention is therefore that of providing a module for measuring the flow rate of fuel and a burner comprising such measuring module that allow the fuel flow rate to be measured effectively. A further object of the present invention is therefore that of providing a module for measuring the flow rate of fuel and a burner comprising such measuring module that are able to provide a fuel flow rate value regardless of the installation conditions.

The technical task and objects specified are substantially reached by a module for measuring the flow rate of fuel and a burner comprising such measuring module according to what is described in the appended claims.

### Brief description of the drawings

Further characteristics and advantages of the present invention will become more apparent from the indicative and thus non-limiting description of an embodiment of a module for measuring the flow rate of fuel and a burner comprising such measuring module.

This description will be set out below with reference to the attached drawings, provided solely for indicative and therefore non-limiting purposes, in which:
- Figure 1 is a schematic representation of a reference view of a measuring module according to the present invention;
- Figure 2 is a schematic representation of a section along the plane B-B of the module of figure 1;

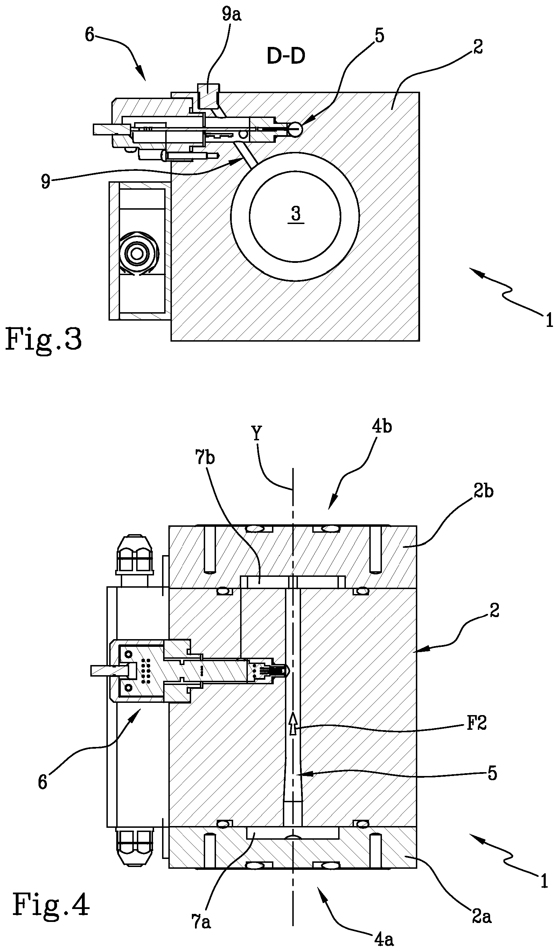

- Figure 3 is a schematic representation of a section along the plane D-D of the module of figure 1;
- Figure 4 is a schematic representation of a section along the plane C-C of the module of figure 1;
- Figure 5 is a schematic representation of an exploded view of the module according to the present invention;
- Figure 6 is a sectional axonometric schematic representation of an alternative embodiment of the module according to the present invention;
- Figures 7, 8, 9, 10, 11 show a schematic and partially transparent view with section planes, of the speed (7, 8, 9) and pressure (10, 11) simulations of the fluid through the module according to the present invention.

### Detailed description of preferred embodiments of the invention

With reference to the appended figures, 1 indicates overall a module for measuring the flow rate of fuel which, for simplicity purposes, will be indicated as module 1.

Fuel means a fluid of the liquid, gasified or gaseous type. Preferably, the fuel comprises methane or LPG or biogas or natural gas or a combination of such substances or other substances able to burn in a combustion and not expressly mentioned herein.

Module 1 represented in the appended figures comprises a main body 2, an inlet body 2a and an outlet body 2b reversibly coupled to each other. Such module 1 is interposed along a fuel supply conduit so that all or part of the fuel supplied passes through the module 1.

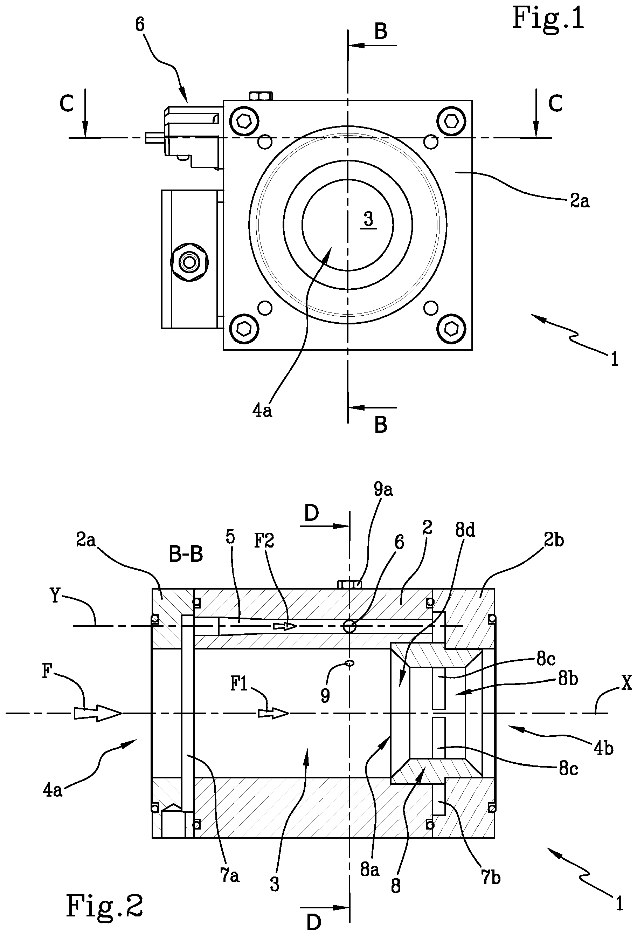

The inlet body 2a, of which there is a front view in figure 1, allows the module 1 to be connected with a first inlet for the fuel of a burner (or other components connected with such first inlet) and the outlet body 2b allows the module 1 to be connected with a combustion zone of the burner.

The main body 2 is preferably made in the form of a box-shaped body as shown in the appended figures (but other embodiments are possible such as, for example, a tubular shape or the like).

Preferably, the main body 2 extends along its own extension axis "X". The main body 2 defines a primary conduit 3 for transporting fuel. Such primary conduit 3 preferably has a circular section as shown in the appended figures (but other embodiments are possible).

The primary conduit 3 is adapted to transport a first flow "F1" of fuel from an inlet portion 4a to an outlet portion 4b of the module 1. In other words, the module 1 has an inlet portion 4a and an outlet portion 4b and the primary conduit 3 extends between the inlet and outlet portions 4a, 4b for transporting the first flow "F1" of fuel.

In the event that the main body 2 is made in the form of a box-shaped body, the primary conduit 3 is made in a central portion of the main body 2 itself. Preferably, the primary conduit 3 extends along an extension axis thereof coinciding with the extension axis "X" of the main body 2.

The module 1 defines a secondary conduit 5 for transporting fuel. The secondary conduit 5 is adjacent to the primary conduit 3 and extends between a first section 7a and a second section 7b of the primary conduit 3. In the appended figures, the first section 7a is proximal to the inlet portion 4a and the second section 7b is proximal to the outlet portion 4b. Preferably, the first section 7a and/or the second section 7b have a greater radial extension than the primary conduit 3. In other words, the first section 7a and/or the second section 7b have a greater circular extension than the circular section of the primary conduit 3. Advantageously, such greater circular section allows a connection to be defined with the secondary conduit 5 and, at the same time, a uniform radial expansion of the fuel to be obtained.

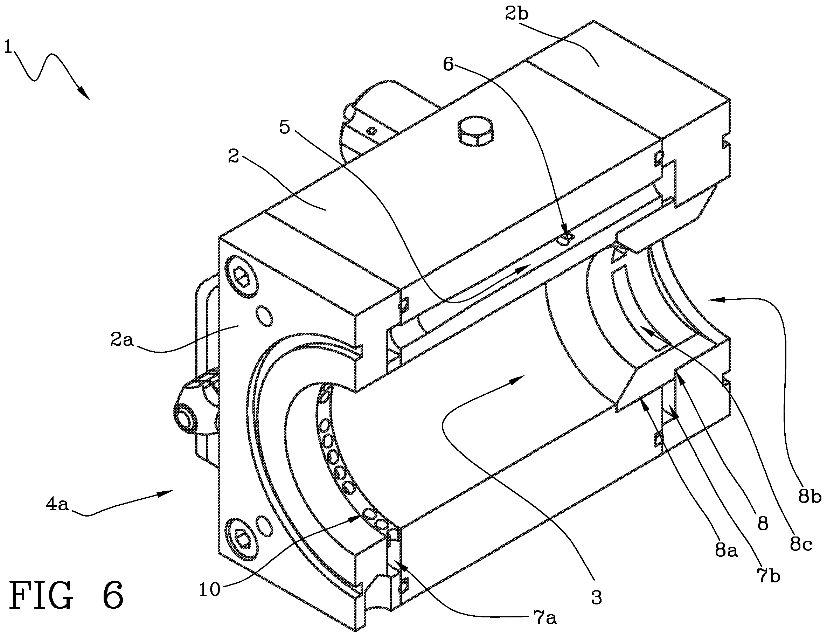

However, in an alternative embodiment, the first section 7a and/or the second section 7b could be defined by simple connection channels of the primary conduit 3 towards the secondary conduit 5 or, in another embodiment illustrated in figure 6, the first section 7a may be provided with millings or holes 10 through which the flow is placed in communication with the conduit 5. Preferably, in figure 6 it is possible to see a sectional view of a crown of holes 10 arranged at the first section 7a. Advantageously, in this latter embodiment the holes 10 allow the inlet flow towards the conduit 5 to be further stabilised.

The secondary conduit 5 is adapted to transport a second flow "F2" of fuel from the first section 7a to the second section 7b of the primary conduit 3 separately from the latter.

The secondary conduit 5, as shown in figure 2, is parallel and distanced with respect to the primary conduit 3. In other words, the secondary conduit 5 extends along an extension axis thereof "Y" parallel to the extension axis of the primary conduit 3 coinciding with the extension axis "X" of the main body 2. Preferably the conduit 5 has a diameter of 7 mm. Furthermore, the inner surface roughness of the conduit 5 has a value (Ra) less than or equal to 1.6 micrometres.

Preferably, the secondary conduit 5 is defined by a first stretch delimited between the inlet body 2a and the main body 2, a second central stretch realised in the main body 2 and a third stretch delimited by the main body 2 and the outlet body 2b. Furthermore, the secondary conduit 5 preferably has a first truncated cone shaped converging stretch (with an angle comprised between 2.5° and 2.8°) at the inlet of the flow "F2".

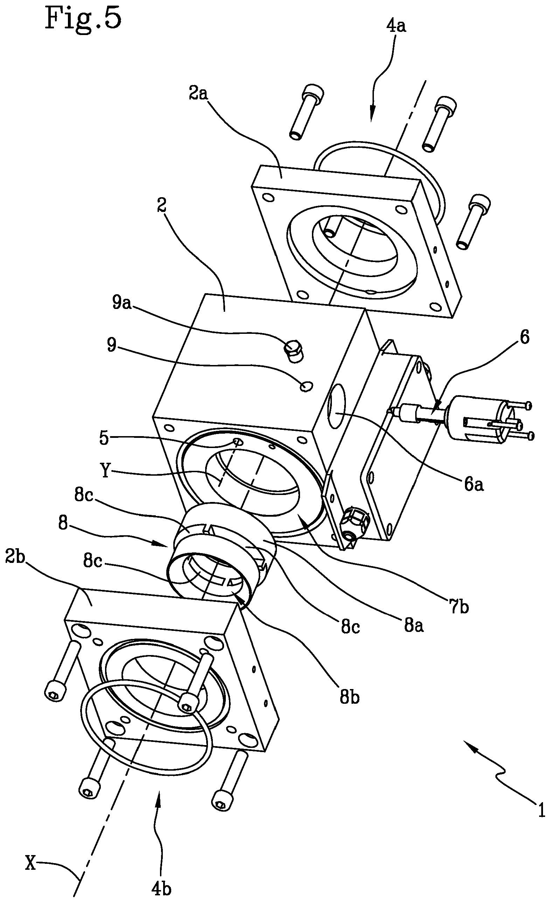

As illustrated in the appended figures, the secondary conduit 5 parallel to the primary conduit is defined in a peripheral portion to the central portion of the main body 2. In other words, the secondary conduit 5 is defined in a portion of the main body 2 radially distanced from the primary conduit 3 as can be seen in figure 2 and in figure 5.

The inlet body 2a, coupled to the main body 2, defines the inlet portion 4a of the module 1.

The inlet body 2a has a distribution seat (in the figures identifiable in proximity to the first section 7a) adapted to introduce the first flow "F1" and the second flow "F2" respectively into the primary conduit 3 and into the secondary conduit 5.

In other words, an inlet flow "F" enters into the inlet portion 4a which, through the distribution seat, is divided into the first flow "F1" and the second flow "F2" of fuel.

As already mentioned, the distribution seat has a shape that extends radially. In other words, the distribution seat is a circular seat adapted to redistribute the flow "F". In the appended figures, the distribution seat does not extend beyond the main body 2 and has an end portion that coincides with an inlet portion of the secondary conduit 5.

The outlet body 2b defines the outlet portion 4b of the module 1.

The module 1 further has a sensor 6 for measuring the flow rate of fuel introduced into the secondary conduit 5. The measurement sensor 6 is of the known type and is adapted to measure a fuel flow rate as a function of the second flow "F2".

Preferably, the measurement sensor 6 extends transversally with respect to an advancement direction (from the inlet portion 4a to the outlet portion 4b) of the second flow "F2". In other words, the measurement sensor 6 is perpendicular to the secondary conduit 5.

As illustrated in the appended figures, the measurement sensor 6 projects into the secondary conduit 5 so as to be hit by the second flow "F2" of fuel. Furthermore, the geometric profile of the sensor support exactly follows the profile of the conduit 5, having the same radius, so as to create a continuous surface free from unevenness.

In the embodiment described, the measurement sensor 6 is adapted to be installed through a cavity 6a of the main body 2 so as to be able to reach the secondary conduit 5 and the second flow "F2" of fuel.

Preferably, the measurement sensor 6 is configured to directly measure the fuel flow rate as it is an immediate detection type sensor. In other words, the measurement sensor 6 is configured to measure in real time a value that identifies the fuel flow rate.

Preferably, the fuel flow rate measurement sensor 6 is an anemometer of the hot film or hot wire type.

The module 1 further has a Venturi constriction device 8. In the appended figures, the Venturi constriction device 8 is defined by an insert having at least one converging inlet 8d and a diverging outlet.

Preferably, the converging inlet 8d has an angle of inclination comprised between 40° and 50° with respect to a longitudinal axis of the Venturi constriction device 8. The choice of the angle of inclination depends on the type of fuel used and on other parameters that define the fuel itself. In particular, according to the present invention, the Venturi constriction device 8 is a separate body from the bodies 2, 2a, 2b so as to be interchangeable.

The Venturi constriction device 8 is arranged in the primary conduit 3 at the second section 7b. In the appended figures, the Venturi constriction device 8 is retained in the locking condition between the main body 2 and the outlet body 2b. In other words, the Venturi constriction device 8 is arranged at the outlet portion 4b.

The Venturi constriction device 8 has a passage section 8b that defines a passage clearance having a minimum cross section onto which the secondary conduit 5 leads. The passage section 8b and the passage holes 8c are sized so as to guarantee an optimal speed range of the flow through the conduit 5 (preferably comprised between 0 and 25 m/s where the sensor is positioned). In other words, the Venturi device 8 is adapted to facilitate conveying the second flow "F2" into the first flow "F1" in said second section 7b. In other words, the Venturi device 8 has a passage section 8b placed in fluid communication with the secondary conduit 5.

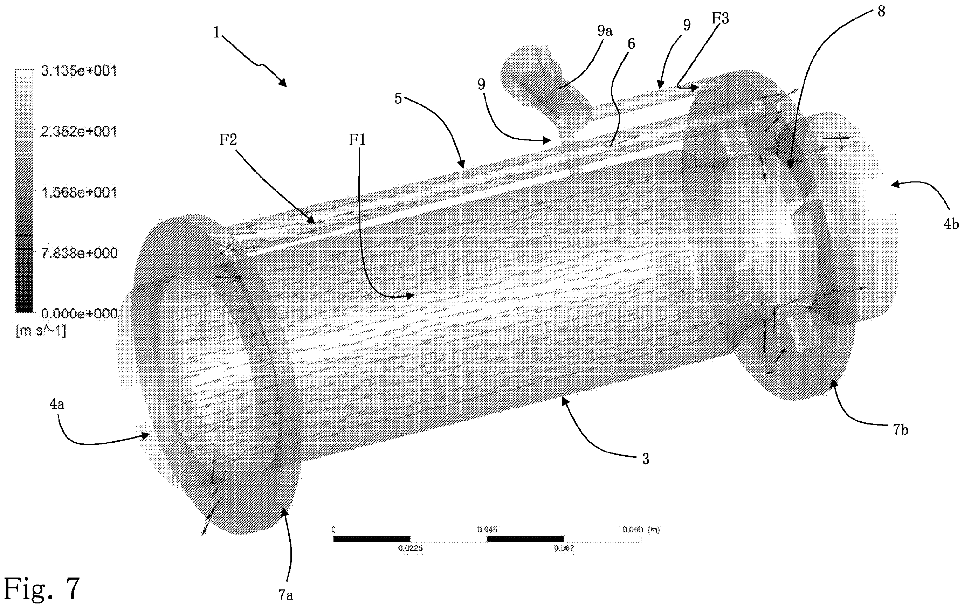

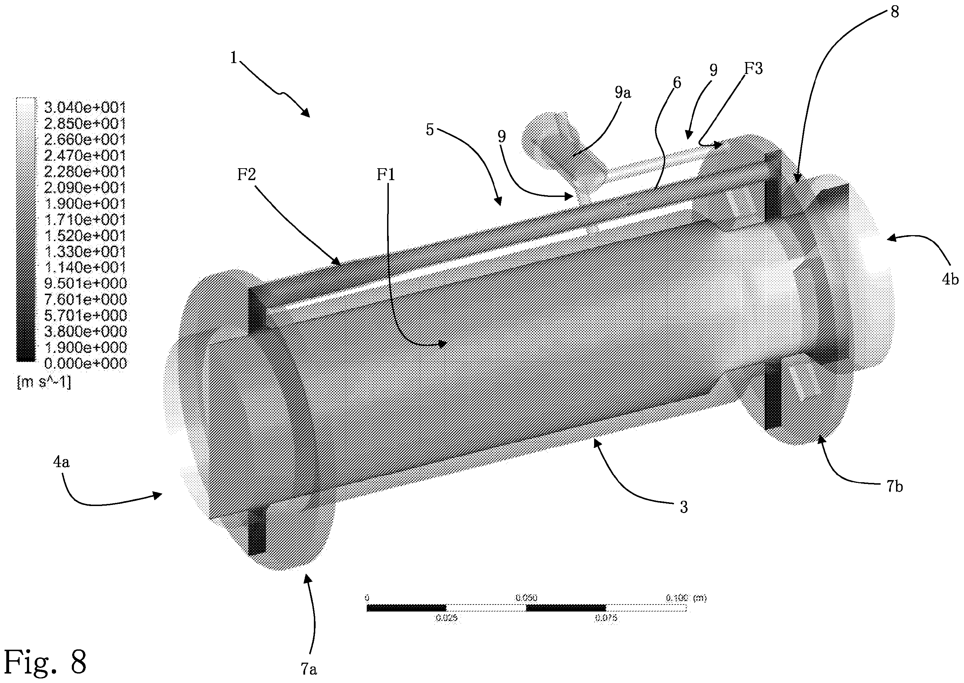

In figures 7, 8, 9 it is possible to see the (fuel) fluid speed variation inside the module 1 (light colour = fast, dark colour = slow). As mentioned, the speed increases at the Venturi constriction device 8.

The Venturi constriction device 8 has an inlet section 8a in fluid communication with the primary conduit 3 to allow the first flow "F1" to be introduced into the Venturi constriction device 8 itself. The inlet section 8a has the same dimensions as the primary conduit 3.

In other words, the inlet section 8a defines a maximum cross section of the converging inlet 8d of the Venturi constriction device 8 and the passage section 8b defines the minimum cross section of the converging inlet 8d. The passage section 8b is in direct connection with the primary conduit 3 allowing the first flow "F1" to cross the passage section 8b itself.

Preferably, the passage section 8b is provided with openings 8c, visible in figure 2, that allow the second flow "F2" to be introduced into the Venturi constriction device 8 and to be conveyed into the first flow "F1". Preferably, the passage section 8b has a cross section comprised between 50% and 95% of the cross section of the primary conduit 3. The choice of dimensions of the cross section and of the passage section 8b depend on the type of fuel used and the speed value of the flow to be maintained through the sensor.

Advantageously, during the assembly of the module 1 it is possible to select the most suitable Venturi constriction device 8 as a function of the fuel used and the speed range of the flow to be maintained at the sensor. In other words, it is possible to select a Venturi constriction device 8 that has an angle of inclination of the converging inlet 8d and a cross section of the passage section 8b that are adapted to this purpose.

Therefore, by only changing the component 8, it is possible to uniform the minimum and maximum speed of the flow through the sensor as a function of the different types of fluid and the different flow rates thereof through the primary conduit 3. In other words, by replacing the component 8 with an analogous one but with different passage sections 8b and 8c, it is possible to uniform the minimum and maximum speed of the flow crossing the sensor regardless of the type of fluid and the flow rate thereof through the primary conduit 3.

In particular, the Venturi constriction device 8 is advantageously used to overcome the drawbacks that have emerged from the prior art.

In particular, when the fuel passes through the passage section 8b there is an increase in the speed of the flow "F1" and a corresponding reduction in the pressure thereof. In this way, the second flow "F2" is sucked by the Venturi constriction device 8 leading to conveying the second flow "F2" with the first flow "F1".

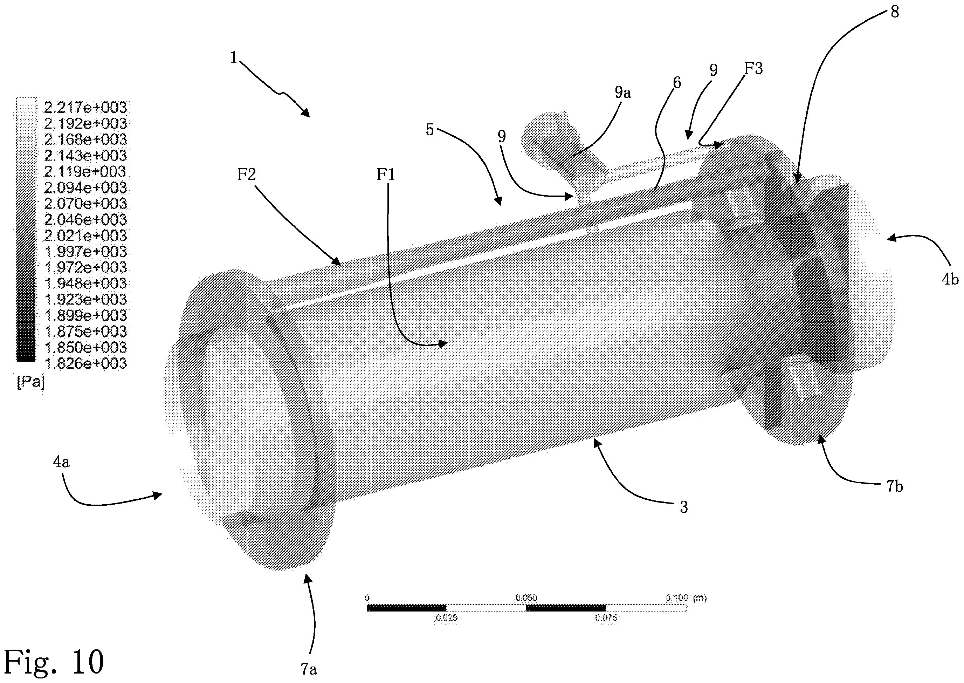

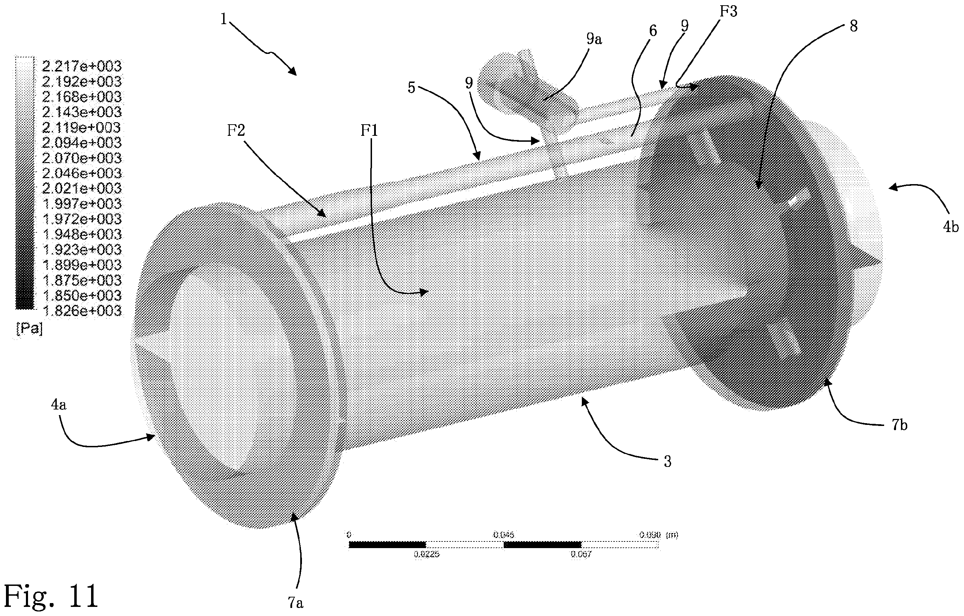

Figures 10 and 11 represent on transverse and longitudinal planes the pressure variation of the fluid (light = high pressure value, dark = low pressure value). It is also possible to note that at the second section 7b the pressure value is lower with respect to the pressure value at the first section 7a, so that the second flow "F2" is attracted towards the first flow "F1".

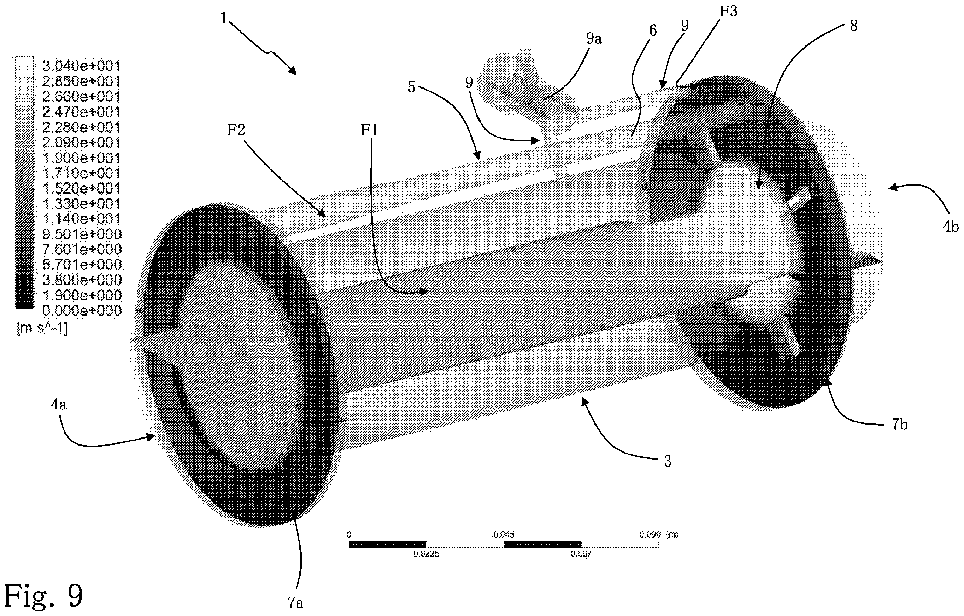

In figures 9 to 11 it is possible to see that, thanks to the radial diffusion of the fluid, the speed values of the fluid itself at the radial expansion of both sections 7a and 7b are very low and uniform.

In this way, the measurement sensor 6 is not affected by the known instabilities and allows the flow of fluid that crosses the module 1 to be measured correctly. In particular, the measurement sensor 6 is isolated from the other components and the increase in speed in the passage section 8b causes a reduction to the pressure therein causing proportional suction of the second flow "F2". In other words, the second flow "F2" is a sample flow isolated from the normal path of the flow of fuel towards the combustion zone which, following the increase in speed and reduction in pressure obtained through the Venturi constriction device 8, allows the correct measurement of the total flow rate of fuel by the measurement sensor 6.

Preferably, the module 1 or the conduit along which the module is installed, could comprise a rectilinear linear conduit arranged upstream of the first section 7a having a substantially constant inner diameter and predefined length such as to further establish the flow "F1" of fluid supplied.

By way of example, such stretch of linear conduit has a diameter equal to the diameter of the primary conduit 3 and a length equal to at least five times the diameter of such primary conduit 3.

During use, the flow "F" of fuel enters into the module 1 through the inlet portion 4a. In the first section 7a, the distribution seat redistributes the flow "F" in the primary conduit 3 and in the secondary conduit 5. In this way, there are two flows "F1" and "F2" which flow respectively from the inlet portion 4a to the outlet portion 4b and from the first section 7a to the second section 7b. In the secondary conduit 5, the measurement sensor 6 of the fuel flow rate is not affected by possible variations caused by flow perturbations or effects due to the deviation of the confined flow along the path that leads the fuel towards the combustion zone thanks to the fact that the flow "F2" is external to the main flow "F1" and is distributed uniformly in sectors 7a and 7b. In this way, the measurement sensor 6 obtains a correct and precise measurement of the fuel flow rate, allowing any control units to modify the inlet flow rate so as to obtain optimal combustion by the burner.

Advantageously, the secondary conduit 5 and the Venturi constriction device 8 allow the drawbacks that have emerged from the prior art to be overcome, allowing known sensors not to be affected by the problems that have emerged from the prior art.

Preferably, as illustrated in the appended figures, the module 1, and in particular the main body 2, also comprises a further conduit 9. The further conduit 9 is in fluid communication with the primary conduit 3 and is transverse to the primary conduit 3 itself. The further conduit 9 comprises a fuel temperature sensor 9a.

Preferably the further conduit 9 is located in a central stretch or in an inlet stretch of the primary conduit 3 distanced from the outlet portion 4b. In the appended figures, the further conduit 9 is located in a central stretch of the primary conduit 3. In other words, the further conduit 9 is located in the primary conduit 3 in a position such as not to interfere with the Venturi constriction device 8. Inside the conduit 9, a flow "F3" is created, which hits the temperature sensor. Such flow is generated by the same Venturi effect that the flow "F2" creates.

In this way, the temperature sensor 9a is able to measure the temperature of the fuel correctly and to communicate it to any control systems.

Preferably, the further conduit 9 ends in the second section 7b so as to discharge the flow "F3" in such second section 7b to be reunited with the flow "F1" and "F2". In particular, the conduit 9 ends with a discharge hole that extends perpendicularly to the lying plane of the second section 7b. Alternatively, the further conduit 9 could discharge at another section or portion of primary conduit 3 through further holes or passages.

The present invention further relates to a burner (not illustrated) comprising the module 1 described above.

The burner comprises a first inlet for fuel in which an inlet valve is interposed for supplying a flow rate of fuel. The burner further comprises a second inlet for the comburent and a combustion zone.

The first inlet and the second inlet converge towards the combustion zone. In this way the combustion zone is supplied with the fuel and the comburent so as to create combustion.

In this configuration, the module 1 previously described is interposed between the first inlet (in particular between the inlet valve unit) and the fuel regulation valve arranged upstream of the combustion head of the burner 1. Preferably, the module 1 is interposed between the inlet valve and the combustion zone.

The measurement sensor 6 of the flow rate of fuel is therefore configured to provide a flow rate value so as to be able to act on the regulation valve in accordance with the measured flow rate value.

Preferably, the burner can comprise a control system configured to regulate the valve as a function of the value measured by the module 1 so as to obtain a suitable fuel flow rate for obtaining appropriate combustion.

It is to be noted that the measurement sensor 6 is configured to detect a value that acts as a reference for the current fuel flow rate for a control system of the burner. In detail, the flow rate of the fluid that passes into the conduit 5 is different from the flow rate of the fluid that passes into the primary conduit 3 but is directly related thereto. Such value detected by the sensor 6 only acts as a reference for detecting a variation of the fuel flow rate at the module for the control system as a whole. Advantageously, the module 1 and the burner described in the foregoing are able to obviate the drawbacks that have emerged in the prior art.

Advantageously, the Venturi constriction device 8 and the secondary conduit 5 allow the measurement sensor 6 to be isolated so that the latter obtains a precise fuel flow rate value.

Advantageously, the Venturi constriction device 8 is conformed so as to obtain an increase in the speed of the fuel flow in proximity to the passage section 8b thereof so as to obtain a proportional suction of the second flow "F2".

Advantageously, the increased speed in the passage section 8b of the Venturi constriction device 8 and the proportional suction of the second flow "F2" allow a precise measurement of the flow rate of fuel to be obtained as this allows the measurement sensor 6 not to be affected by instability variations, turbulence, deviation of the confined flow in the path that takes the fuel itself from the first inlet to the combustion zone.

## Claims

1. A module (1) for measuring the flow rate of fuel having:
- an inlet portion (4a) and an outlet portion (4b) and a primary conduit (3) for transporting the fuel extending between said inlet and outlet portions (4a, 4b) for transporting a first flow (F1) of fuel; said primary conduit (3) being defined in a main body (2) of the module (1);
- a secondary conduit (5) for transporting fuel, adjacent to said primary conduit (3) and extending between a first section (7a) and a second section (7b) of said primary conduit (3) and arranged in fluid communication with the latter for transporting a second flow (F2) of fuel between said first and second section (7b), the secondary conduit (5) being parallel to the primary conduit and being defined in a peripheral portion to the central portion of the main body (2); further the secondary conduit (5) being defined in a portion of said main body (2) radially distanced from the primary conduit (3);
- a sensor (6) for measuring the flow rate of fuel introduced into said secondary conduit (5); said sensor (6) being configured to be installed through a cavity (6a) of the main body (2) so as to be able to reach the secondary conduit (5) and the second flow (F2) of fuel;
- a Venturi constriction device (8) arranged in the primary conduit (3) at said second section (7b) and at the outlet portion (4b); wherein said Venturi constriction device (8) having an inlet section (8a) in fluid communication with the primary conduit (3) to allow the first flow (F1) to be introduced into the Venturi constriction device (8) itself, said inlet section (8a) having the same dimensions as the primary conduit (3);
said Venturi constriction device (8) is a separate body with respect to the primary conduit (3) and interchangeable so as to uniform the minimum and maximum speed of the flow (F2) crossing the sensor (6) regardless of the type of fluid and the flow rate thereof through the primary conduit (3).

2. The module according to claim 1, comprising at least one outlet body (2b) coupled to the main body (2) and defining said outlet portion (4b), said Venturi constriction device (8) being defined by an insert having at least one converging inlet (8d) and a diverging outlet and retained in a locking condition between said main body (2) and said outlet body (2b).

3. The module according to claim 2, further comprising an inlet body (2a) coupled to the main body (2) and defining said inlet portion (4a), and wherein said secondary conduit (5) is defined by a first stretch delimited between said inlet body (2a) and said main body (2), a second central stretch realised in the main body (2) and a third stretch delimited between said main body (2) and said outlet body (2b).

4. The module (1) according to claim 1 or 2, wherein said secondary conduit (5) is defined by a pipe external to said main body (2).

5. The module (1) according to one or more of the preceding claims, wherein said Venturi constriction device (8) has a passage section (8b), defining a passage clearance having a minimum cross section onto which said secondary conduit (5) leads.

6. The module (1) according to claim 5, wherein said passage section (8b) has a cross section comprised between 50% and 95% of the cross section of the primary conduit (3).

7. The module (1) according to claim 2, wherein said converging inlet (8d) has an angle of inclination comprised between 40° and 50° with respect to a longitudinal axis of said Venturi constriction device (8).

8. The module (1) according to one or more of the preceding claims, also having a further conduit (9), in fluid communication with and transverse to said primary conduit (3), comprising a fuel temperature sensor (9a).

9. The module (1) according to claim 8, wherein said further conduit (9) is connected in a central stretch or in an inlet stretch of said primary conduit (3).

10. A burner comprising:
- a first inlet for fuel in which an inlet valve is interposed for regulating a flow rate of supplied fuel;
- a second inlet for the comburent;
- a combustion zone into which the first inlet and the second inlet flow together for supplying thereto the fuel and the comburent so as to create combustion;
- a module (1) for measuring the flow rate of fuel according to one or more of the preceding claims interposed between said first inlet for the fuel and said combustion zone;
wherein said sensor (6) for measuring the flow rate of fuel is configured to measure a value of said flow rate so as to be able to regulate said inlet valve in accordance with said measured flow rate value.

11. The burner according to claim 10, comprising a control system configured to regulate said inlet valve in accordance with said measured flow rate value.

## Patentansprüche

1. Modul (1) zur Durchflussmessung von Brennstoff aufweisend:
- einen Einlassabschnitt (4a) und einen Auslassabschnitt (4b) und wobei eine Primärleitung (3) zum Transportieren des Brennstoffs sich zwischen den Einlass- und Auslassabschnitten (4a, 4b) erstreckt, um einen ersten Brennstoffstrom (F1) zu transportieren; wobei die Primärleitung (3) in einem Hauptkörper (2) des Moduls (1) definiert ist;
- eine Sekundärleitung (5) zum Transportieren von Brennstoff, die an die Primärleitung (3) angrenzt und sich zwischen einem ersten Teilstück (7a) und einem zweiten Teilstück (7b) der Primärleitung (3) erstreckt und mit letzteren in Fluidkommunikation zum Transportieren eines zweiten Brennstoffstroms (F2) zwischen dem ersten und zweiten Teilstück (7b) steht, wobei die Sekundärleitung (5) parallel zur Primärleitung verläuft und in einem Umfangsabschnitt zum Mittelabschnitt des Hauptkörpers (2) definiert ist und ferner die Sekundärleitung (5) in einem Abschnitt des Hauptkörpers (2) definiert ist, der radial von der Primärleitung (3) beabstandet ist;
- einen Sensor (6) zur Durchflussmessung von Brennstoff, der in die Sekundärleitung (5) eingeführt ist; wobei der Sensor (6) ausgebildet ist, um durch einen Hohlraum (6a) des Hauptkörpers (2) installiert zu werden, um die Sekundärleitung (5) und den zweiten Brennstoffstrom (F2) erreichen zu können;
- eine Venturi-Konstriktionsvorrichtung (8), die in der Primärleitung (3) am zweiten Teilstück (7b) und am Auslassabschnitt (4b) angeordnet ist; wobei die Venturi-Konstriktionsvorrichtung (8) ein Einlassteilstück (8a) in Fluidkommunikation mit der Primärleitung (3) aufweist, um zu ermöglichen, dass der erste Strom (F1) in die Venturi-Konstriktionsvorrichtung (8) selbst eingeführt wird, wobei das Einlassteilstück (8a) die gleichen Abmessungen wie die Primärleitung (3) aufweist; die Venturi-Konstriktionsvorrichtung (8) ist ein separater Körper gegenüber der Primärleitung (3) und ist austauschbar, um die minimale und maximale Geschwindigkeit des Stroms (F2), der den Sensor (6) durchquert, zu vereinheitlichen, unabhängig von der Art des Fluids und dessen Durchfluss durch die Primärleitung (3) .

2. Modul nach Anspruch 1, umfassend mindestens einen Auslasskörper (2b), der mit dem Hauptkörper (2) verbunden ist und den Auslassabschnitt (4b) definiert, wobei die Venturi-Konstriktionsvorrichtung (8) durch einen Einsatz mit mindestens einem konvergierenden Einlass (8d) und einen divergierenden Auslass definiert ist und in einem Sperrzustand zwischen dem Hauptkörper (2) und dem Auslasskörper (2b) gehalten wird.

3. Modul nach Anspruch 2, das ferner einen Einlasskörper (2a) umfasst, der mit dem Hauptkörper (2) gekoppelt ist und den Einlassabschnitt (4a) definiert, und wobei die Sekundärleitung (5) durch eine erste Strecke, die zwischen dem Einlasskörper (2a) und dem Hauptkörper (2) begrenzt ist, eine zweite zentrale Strecke, die im Hauptkörper (2) realisiert ist, und eine dritte Strecke, die zwischen dem Hauptkörper (2) und dem Auslasskörper (2b) begrenzt ist, definiert ist.

4. Modul (1) nach Anspruch 1 oder 2, wobei die Sekundärleitung (5) durch ein Rohr außerhalb des Hauptkörpers (2) definiert ist.

5. Modul (1) nach einem oder mehreren der vorhergehenden Ansprüche, wobei die Venturi-Konstriktionsvorrichtung (8) ein Durchgangsteilstück (8b) aufweist, der einen Durchgangsspalt mit einem minimalen Querschnitt definiert, auf den die Sekundärleitung (5) führt.

6. Modul (1) nach Anspruch 5, wobei das Durchgangsteilstück (8b) einen Querschnitt aufweist, das zwischen 50 % und 95 % des Querschnitts der Primärleitung (3) liegt.

7. Modul (1) nach Anspruch 2, wobei der konvergierende Einlass (8d) einen Neigungswinkel zwischen 40° und 50° zu einer Längsachse der Venturi-Konstriktionsvorrichtung (8) aufweist.

8. Modul (1) nach einem oder mehreren der vorhergehenden Ansprüche, aufweisend auch eine weitere Leitung (9) in Fluidkommunikation mit und quer zu der Primärleitung (3), umfassend einen Brennstofftemperatursensor (9a).

9. Modul (1) nach Anspruch 8, wobei die weitere Leitung (9) in einer zentralen Strecke oder in einer Einlassstrecke der Primärleitung (3) verbunden ist.

10. Brenner, umfassend:
- einen ersten Einlass für Brennstoff, in den ein Einlassventil eingefügt ist, um den Durchfluss des zugeführten Brennstoffs zu regulieren;
- einen zweiten Einlass für das Brennmittel;
- eine Verbrennungszone, in die der erste Einlass und der zweite Einlass zusammenfließen, um diesen den Brennstoff und das Brennmittel zuzuführen, um eine Verbrennung zu erzeugen;
- ein Modul (1) zur Durchflussmessung von Brennstoff nach einem oder mehreren der vorhergehenden Ansprüche, das zwischen dem ersten Einlass für den Brennstoff und der Verbrennungszone angeordnet ist;
wobei der Sensor (6) zur Durchflussmessung von Brennstoff so ausgebildet ist, dass er einen Wert des Durchflusses misst, um das Einlassventil gemäß dem gemessenen Durchflusswert regulieren zu können.

11. Brenner nach Anspruch 10, umfassend ein Steuersystem, das ausgebildet ist, um das Einlassventil gemäß dem gemessenen Durchflusswert zu regulieren.

## Revendications

1. Module (1) de mesure du débit de carburant, comportant :
- une partie d'entrée (4a) et une partie de sortie (4b) et un conduit principal (3), servant à transporter le carburant, se prolongeant entre lesdites parties d'entrée et de sortie (4a, 4b) pour transporter un premier flux (F1) de carburant ; ledit conduit principal (3) étant défini dans un corps principal (2) du module (1) ;
- un conduit secondaire (5), servant à transporter du carburant, adjacent audit conduit principal (3) et se prolongeant entre une première section (7a) et une seconde section (7b) dudit conduit principal (3) et disposé en communication fluidique avec ce dernier pour transporter un second flux (F2) de carburant entre lesdites première et seconde sections (7b), le conduit secondaire (5) étant parallèle au conduit principal et étant défini dans une partie périphérique par rapport à la partie centrale du corps principal (2) ; de plus, le conduit secondaire (5) est défini dans une partie dudit corps principal (2) radialement distancée du conduit principal (3) ;
- un capteur (6) servant à mesurer le débit de carburant introduit dans ledit conduit secondaire (5) ; ledit capteur (6) étant configuré pour être installé à travers une cavité (6a) du corps principal (2) de manière à pouvoir atteindre le conduit secondaire (5) et le second flux (F2) de carburant ;
- un dispositif d'étranglement Venturi (8) disposé dans le conduit principal (3) en correspondance de ladite seconde section (7b) et en correspondance de la partie de sortie (4b); dans lequel ledit dispositif d'étranglement Venturi (8) comporte une section d'entrée (8a) en communication fluidique avec le conduit principal (3) pour permettre au premier flux (F1) d'être introduit dans le dispositif d'étranglement Venturi (8) lui-même, ladite section d'entrée (8a) ayant les mêmes dimensions que le conduit principal (3) ;
ledit dispositif d'étranglement Venturi (8) est un corps séparé par rapport au conduit principal (3) et interchangeable de manière à uniformiser la vitesse minimale et maximale du flux (F2) traversant le capteur (6) indépendamment du type de fluide et de son débit à travers le conduit principal (3).

2. Module selon la revendication 1, comprenant au moins un corps de sortie (2b) couplé au corps principal (2) et définissant ladite partie de sortie (4b), ledit dispositif d'étranglement Venturi (8) étant défini par un insert comportant au moins une entrée convergente (8d) et une sortie divergente et retenu dans une condition de verrouillage entre ledit corps principal (2) et ledit corps de sortie (2b).

3. Module selon la revendication 2, comprenant de plus un corps d'entrée (2a) couplé au corps principal (2) et définissant ladite partie d'entrée (4a), et dans lequel ledit conduit secondaire (5) est défini par une première portion délimitée entre ledit corps d'entrée (2a) et ledit corps principal (2), une deuxième portion centrale réalisée dans le corps principal (2) et une troisième portion délimitée entre ledit corps principal (2) et ledit corps de sortie (2b).

4. Module (1) selon la revendication 1 ou 2, dans lequel ledit conduit secondaire (5) est défini par un tuyau externe audit corps principal (2).

5. Module (1) selon une ou plusieurs des revendications précédentes, dans lequel ledit dispositif d'étranglement Venturi (8) comporte une section de passage (8b) définissant un espace libre de passage comportant une section transversale minimale sur laquelle ledit conduit secondaire (5) aboutit.

6. Module (1) selon la revendication 5, dans lequel ladite section de passage (8b) comporte une section transversale comprise entre 50 et 95 % de la section transversale du conduit principal (3).

7. Module (1) selon la revendication 2, dans lequel ladite entrée convergente (8d) a un angle d'inclinaison compris entre 40 et 50° par rapport à un axe longitudinal dudit dispositif d'étranglement Venturi (8).

8. Module (1) selon une ou plusieurs des revendications précédentes, comportant également un conduit (9) supplémentaire, en communication fluidique avec ledit conduit primaire (3) et transversal à ce dernier, comprenant un capteur de température de carburant (9a).

9. Module (1) selon la revendication 8, dans lequel ledit conduit (9) supplémentaire est relié dans une portion centrale ou dans une portion d'entrée dudit conduit principal (3).

10. Brûleur, comprenant :
- une première entrée pour le carburant dans laquelle une vanne d'entrée est interposée pour réguler le débit de carburant fourni ;
- une deuxième entrée pour le comburant ;
- une zone de combustion dans laquelle la première entrée et la deuxième entrée s'écoulent ensemble pour y fournir le carburant et le comburant de manière à créer une combustion ;
- un module (1) de mesure du débit de carburant selon une ou plusieurs des revendications précédentes, interposé entre ladite première entrée pour le carburant et ladite zone de combustion ;
dans lequel ledit capteur (6) de mesure du débit de carburant est configuré pour mesurer une valeur dudit débit de manière à pouvoir réguler ladite vanne d'entrée en fonction de ladite valeur de débit mesurée.

11. Brûleur selon la revendication 10, comprenant un système de commande configuré pour réguler ladite vanne d'entrée en fonction de ladite valeur de débit mesurée.
